# EUROPÄISCHE PATENTSCHRIFT

(11) **EP 2 785 546 B1**
(45) Veröffentlichungstag und Bekanntmachung des Hinweises auf die Patenterteilung: **25.11.2015**
(21) Anmeldenummer: 12715584.4
(22) Anmeldetag: 02.04.2012
(51) Int. Cl.: B60J 7/00

(54) **SEITENBLENDE EINES ZU ÖFFNENDEN FAHRZEUGDACHES**
SIDE PANEL OF A VEHICLE ROOF THAT CAN BE OPENED
OBTURATEUR LATÉRAL POUR UN TOIT OUVRANT DE VÉHICULE

(30) Priorität: 02.12.2011 DE 102011119991
(43) Veröffentlichungstag der Anmeldung: 08.10.2014
(73) Patentinhaber: Webasto SE, 82131 Stockdorf (DE)
(72) Erfinder: FÄRBER, Manfred, 82407 Wielenbach (DE)
(74) Vertreter: Fischer & Konnerth
(86) Internationale Anmeldenummer: PCT/EP2012/001462
(87) Internationale Veröffentlichungsnummer: WO 2013/079125

(56) Entgegenhaltungen:
- DE-A1- 10 304 506
- DE-B3-102007 056 797
- DE-U1- 20 104 988
- JP-A- 2006 315 615

## Beschreibung

Die Erfindung betrifft eine Seitenblende eines zu öffnenden Fahrzeugdaches mit den Merkmalen des Oberbegriffs des Anspruchs 1.

Aus der DE 10 2008 015 669 B3 ist eine Seitenblende bekannt geworden, die in Gestalt einer starren Lamelle bei geschlossenem Deckel des zu öffnenden Fahrzeugdaches in einem Blendenschacht eines Blendenkastens unter dem Seitenrand des Deckels aufgenommen ist und um eine an ihrem Vorderende in Dachquerrichtung verlaufende Schwenkachse aus dem Blendenschacht vertikal nach oben ausschwenkbar ist, wenn der Deckel über das Fahrzeugdach ausschwenkt. Der Blendenkasten mit dem Blendenschacht erfordert jedoch einen großen und insbesondere in vertikaler Richtung hohen Bauraum am Dachseitenholm im Bereich neben der Dachöffnung des Fahrzeugdaches.

Aus der JP 2006 315615 A ist eine gattungsgemäße Seitenblende bekannt geworden, die mittels einer sich linear erstreckenden Schwenklagerung dachseitig schwenkbar gelagert ist.

Der Erfindung liegt die Aufgabe zugrunde, eine eingangs genannte Seitenblende zu schaffen, die hinsichtlich ihrer Funktionalität, ihrer Einsatzmöglichkeiten und dem erforderlichen Einbauraum verbessert ist, sowie ein Fahrzeugdach mit einer solchen Seitenblende bereitzustellen.

Diese Aufgabe wird erfindungsgemäß durch eine Seitenblende mit den Merkmalen des Anspruchs 1 gelöst.

Die Aufgabe wird auch durch ein öffnungsfähiges Fahrzeugdach mit einer Dachöffnung und einem aus der Dachöffnung anhebbaren Deckel und mit einer Seitenblende nach einem der Ansprüche 1 bis 9 gelöst.

Vorteilhafte Ausgestaltungen der Erfindung sind in den abhängigen Ansprüchen angegeben.

Da sich die Schwenklagerung entlang der Seitenblende oder einem Längsrand wie insbesondere einem bezüglich einer Abdeckstellung unteren Rand erstreckt, kann das Verschwenken der Seitenblende um ihre Längsachse in Querrichtung erfolgen, wodurch ein besonders geringer Einbauraum in Höhenrichtung erforderlich ist. Bei aus der Abdeckstellung in eine in etwa horizontale flache Stellung herabgeschwenkter Seitenblende wird die Bauhöhe im wesentlichen nur für die Schwenklagerung benötigt und wird somit im wesentlichen nur von dieser bestimmt. Die Schwenklagerung bzw. eine Schwenkachse der Schwenklagerung ist in Einbaustellung der Seitenblende demzufolge bevorzugt im wesentlichen in Dachlängsrichtung oder entlang einem Seitenrand des Deckels angeordnet und ausgerichtet.

Da die erfindungsgemäße Seitenblende eine Schwenklagerung mit einer gekrümmtem oder gewölbten Schwenkachse aufweist, kann die Seitenblende mittels ihrer Schwenklagerung auch an gekrümmten Fahrzeugdächern mit einer bevorzugt im wesentlichen in Dachlängsrichtung verlaufenden Schwenkachse angebracht werden. Als gekrümmtes Fahrzeugdach wird auch jedes Dach oder Dachbauteil wie auch ein Schiebe-Hebe-Dach angesehen, das in Dachlängsrichtung und/oder in Dachquerrichtung in bekannter Weise gekrümmt, gewölbt oder konkav verläuft. Der Verlauf der Schwenkachse in Dachlängsrichtung bedeutet ihre grundsätzliche Ausrichtung im Gegensatz zu der in Dachquerrichtung verlaufenden Schwenkachse der aus der DE 10 2008 015 669 B3 bekannten Seitenblende und umfasst sowohl geneigte wie auch schräg verlaufende gekrümmte Schwenkachsen, die sich aber an ihrer Einbaustelle am Fahrzeugdach im wesentlichen in Dachlängsrichtung erstrecken, so dass die Seitenblende in Dachquerrichtung verschwenkbar ist.

Die gekrümmte oder gewölbte Schwenkachse kann auch in Abhängigkeit ihrer Krümmung als 2-D-Achse (z. B Krümmung innerhalb einer vertikalen Fahrzeuglängsebene) oder als 3-D-Achse (räumliche Krümmung) bezeichnet werden.

Als dachseitige Anbringung wird jede Anbringung der Schwenklagerung verstanden, die nicht am Deckel erfolgt, sondern an einem anderen Teil des Daches wie z. B. einem Rahmen des zu öffnenden Schiebe-Hebe-Daches oder einem Dachseitenholm. Damit bewegt sich die Seitenblende nicht mit dem Deckel mit, wenn dieser in seiner ausgestellten Stellung zum Freilegen der Dachöffnung nach hinten über die angrenzende Dachfläche verlagert wird.

Die Schwenkachse ist als feste körperliche Achse der Schwenklagerung gebildet, um die die Seitenblende verschwenkbar ist.

Die Schwenklagerung kann erfindungsgemäß jedoch auch von einem flexibel verformbaren Lagerabschnitt der Seitenblende bereit gestellt werden, so dass sich die insbesondere gekrümmte Schwenkachse als Momentanschwenkachse entsprechend dem jeweiligen Schwenkwinkel der Seitenblende verlagert, aber dabei ihre Krümmung im wesentlichen beibehalten und/oder anpassen kann.

Ein bewegbarer Deckel des Fahrzeugdaches bzw. eines Schiebe-Hebe-Daches ist insbesondere nicht rechteckig, sondern in Draufsicht z. B. trapezförmig, wobei der Deckel in Quer- oder Breitenrichtung einen gegenüber seinem Hinterrand schmaleren oder kürzeren Vorderrand aufweist. Die Seitenränder des Deckels folgen dem Verlauf der beiden sich gegenüber liegenden Dachseitenholme, deren gegenseitiger Abstand von den A-Säulen ausgehend in Dachlängsrichtung zunimmt.

Die Seitenblende ist an dem Fahrzeugdach derart anbringbar oder angebracht, dass die Schwenklagerung bzw. die Schwenkachse in etwa unter dem Seitenrand des in Schließstellung angeordneten Deckels verläuft. Wenn der Deckel in seine Lüftungsstellung ausgestellt, angehoben oder hochgeschwenkt ist, deckt die Seitenblende in ihrer hochgeschwenkten in etwa vertikalen Abdeckstellung die seitliche Öffnung bzw. den seitlichen Spalt zwischen dem Deckelseitenrand und dem Fahrzeugdach bzw. dem Dachseitenholm ab. Dabei ist insbesondere vorgesehen, dass die Seitenblende an ihrem freien Außenrand dicht gegen den Deckel und insbesondere eine am Deckelseitenrand vorgesehene nach unten ragende Deckelblende anliegt, um im Fahrbetrieb eine möglichst störungsfreie Luftströmung am Deckelseitenrand mit dem Vorteil einer Geräuschreduzierung in diesem Bereich zu erzielen. Die Seitenblende deckt somit die Deckelmechanik von außen her ab.

In bevorzugter Gestaltung weist die Seitenblende einen die Schwenkachse enthaltenden Schwenklagerbereich und eine flächige Blendenlamelle auf und der Werkstoff des Schwenklagerbereichs und der Werkstoff der Blendenlamelle sind jeweils für eine flexible Verformung beim Verschwenken der Seitenblende um eine gekrümmte oder gewölbte Schwenkachse ausgelegt. Die flächige Blendenlamelle ist insbesondere derart gebildet, dass sie zwar flexibel, aber nicht faltbar oder knickbar ist.

Zweckmäßigerweise sind der Schwenklagerbereich und die Blendenlamelle aus demselben Werkstoff mit denselben die Verformbarkeit bestimmenden Eigenschaften gebildet. Dabei weist der Werkstoff, wenn eine Schwenkachse mit geringer Krümmung oder Wölbung vorgesehen ist, einen höheren Verformungswiderstand auf und, wenn eine Schwenkachse mit stärkerer Krümmung oder Wölbung vorgesehen ist, einen geringeren Verformungswiderstand auf.

Der Schwenklagerbereich kann auch aus einem Werkstoff mit höherem Verformungswiderstand und die Blendenlamelle kann aus einem anderen Werkstoff mit geringerem Verformungswiderstand gebildet sein. Eine solche 2K-Blende kann somit in den unterschiedlichen Verformungsbereichen durch spezielle Werkstoffwahl für unterschiedlich gekrümmte Schwenkachsen ausgelegt und angepasst werden.

Als Werkstoffe eignen sich insbesondere Kunststoffe oder Verbundwerkstoffe, aber auch metallische Werkstoffe mit einer geeigneten elastischen Verformbarkeiten können verwendet werden.

Eine weitere bevorzugte Ausführungsform sieht vor, dass die Blendenlamelle Schlitze enthält, die sich von ihrem Außenrand gegen den Schwenklagerbereich erstrecken und voneinander getrennte Stege bilden, die beim Verschwenken der Seitenblende gegeneinander verformbar sind. Die körperliche Unterbrechung der ansonsten durchgehenden Blendenlamelle erhöht die Beweglichkeit oder Verformbarkeit der geschlitzten Blendenlamelle, so dass auch vergleichsweise harte Werkstoffe mit hohem Verformungswiderstand verwendet werden können. Die Länge oder Tiefe der Schlitze bestimmt den Verformungswiderstand. Die gesamte Blendenlamelle kann derart geschlitzt sein oder es sind nur gewisse Abschnitte in dieser Weise geschlitzt. Die Schlitze und auch die Stege können derart bezüglich der Außenfläche der Blendenlamelle geneigt sein, dass eine vorbeiströmende Luftströmung aerodynamisch günstig vorbeigeführt wird und geringe Wirbelbildung einer Störgeräuscherzeugung entgegen wirkt.

Das Verschwenken der Seitenblende kann z. B. durch einen Antriebsmechanismus erfolgen. Zweckmäßigerweise wird die Seitenblende jedoch durch den Deckel selbst verschwenkt. Hierzu kann vorgesehen sein, dass der Deckel an seiner Deckelunterseite zumindest eine Deckelsteuerkurve zum Verschwenken der Seitenblende aufweist. Zweckmäßigerweise sind mehrere in Deckellängsrichtung voneinander beabstandete Deckelsteuerkurven vorgesehen, die die Seitenblende damit in mehrfachem Gleitkontakt verschwenken. Diese Gestaltung ist insbesondere dann vorteilhaft, wenn die Blendenlamelle aus einem vergleichsweise leicht verformbaren Werkstoff besteht und die mehrfache Führung ein sicheres Verschwenken der Seitenblende über ihre gesamte Länge gewährleistet. Darüber hinaus können mehrere Steuerkurven als eine gesamte einstückige Steuerkurvenfläche gebildet werden.

Bevorzugt ist die Seitenblende in eine im wesentlichen vertikale Abdeckstellung vorgespannt und gegen einen Anschlag anlegbar. Solange die Seitenblende in Dichtkontakt mit dem Deckel und insbesondere einer Deckelblende am Seitenrand des Deckels ist, ist der Anschlag funktionslos. Wenn jedoch der Deckel sich aus dem Kontakt mit der Steuerkurve entfernt, legt sich die Seitenblende am Anschlag an und behält somit ihre im wesentlichen vertikale Abdeckstellung bei, bis der Kontakt mit dem Deckel wieder hergestellt ist.

Grundsätzlich kann die Seitenblende jede zum Abdecken einer Öffnung geeignete Form aufweisen. Zweckmäßigerweise ist die Form der Seitenblende an den seitlichen Spalt unter dem hochgeschwenkten Deckel angepasst. Insbesondere verjüngt sich die Seitenblende bzw. die Blendenlamelle in ihrer bezüglich der Schwenkachse radialen Ausdehnung über ihre Länge von ihrem Hinterende zu ihrem Vorderende hin und ist damit an eine sich von vorne nach hinten erweiternde Spaltfläche oder Spaltöffnung angepasst.

Nachfolgend wird die Erfindung anhand von Ausführungsbeispielen erfindungsgemäßer Seitenblende unter Bezugnahme auf die Zeichnung näher erläutert. Es zeigt:
- Fig. 1: in einer perspektivischen Draufsicht ein öffnungsfähiges Fahrzeugdach mit einem in einer Dachöffnung in Schließstellung angeordneten Deckel;
- Fig. 2: in einer perspektivischen Draufsicht gemäß Fig. 1 das Fahrzeugdach mit dem mit seinem Hinterrand in eine Lüftungsstellung hochgeschwenkten Deckel und einer aktiven Seitenblende zum Abdecken des seitlichen Spaltes zwischen dem Deckel und dem Fahrzeugdach;
- Fig. 3: in einer perspektivischen Draufsicht gemäß Fig. 1 das Fahrzeugdach, wobei der hochgeschwenkte Deckel zum Freigeben der Dachöffnung relativ zur Seitenblende nach hinten verlagert ist;
- Fig. 4: in einer Querschnittansicht das Fahrzeugdach im Bereich eines Dachseitenholms bei in Lüftungsstellung ausgestelltem Deckel;
- Fig. 5: in einer Querschnittansicht gemäß Fig. 4 das Fahrzeugdach mit dem in einer Zwischenschwenkstellung angeordneten Deckel;
- Fig. 6: in einer Querschnittansicht gemäß Fig. 4 das Fahrzeugdach mit dem in Schließstellung angeordneten Deckel;
- Fig. 7: in einer perspektivischen Draufsicht die Unterseite des Deckels in der Stellung gemäß Fig. 4 mit der in vertikaler Abdeckstellung angeordneten Seitenblende (ohne Dachseitenholm);
- Fig. 8: in einer perspektivischen Draufsicht die Unterseite des Deckels in der Stellung gemäß Fig. 5 mit der vom Deckel in eine schräge Zwischenstellung verschwenkten Seitenblende;
- Fig. 9: in einer perspektivischen Draufsicht die Unterseite des Deckels in der Stellung gemäß Fig. 6 mit der vom Deckel herabgeschwenkten Seitenblende;
- Fig. 10: in einer perspektivischen Draufsicht ein Ausführungsbeispiel der Seitenblende;
- Fig. 11: in einer perspektivischen Draufsicht ein weiteres Ausführungsbeispiel der Seitenblende;
- Fig. 12: in einer perspektivischen Draufsicht ein weiteres Ausführungsbeispiel der Seitenblende;
- Fig. 13: in einer perspektivischen Draufsicht ein weiteres Ausführungsbeispiel der Seitenblende;
- Fig. 14: in einer Draufsicht die gegen den Deckel gerichtete Schmalseite der Seitenblende der Fig. 13;
- Fig. 15: in einer Querschnittansicht gemäß Fig. 4 ein weiteres Ausführungsbeispiel einer erfindungsgemäßen Seitenblende bei in Lüftungsstellung ausgestelltem Deckel;
- Fig. 16: in einer Querschnittansicht die Seitenblende der Fig. 15 in durch den Deckel herabgeschwenkter Stellung;
- Fig. 17: in einer perspektivischen Draufsicht die in Fig. 15 dargestellte Seitenblende am ausgestellten Deckel; und
- Fig. 18: in einer perspektivischen Draufsicht die in Fig. 16 dargestellte Seitenblende am geschlossenen Deckel.

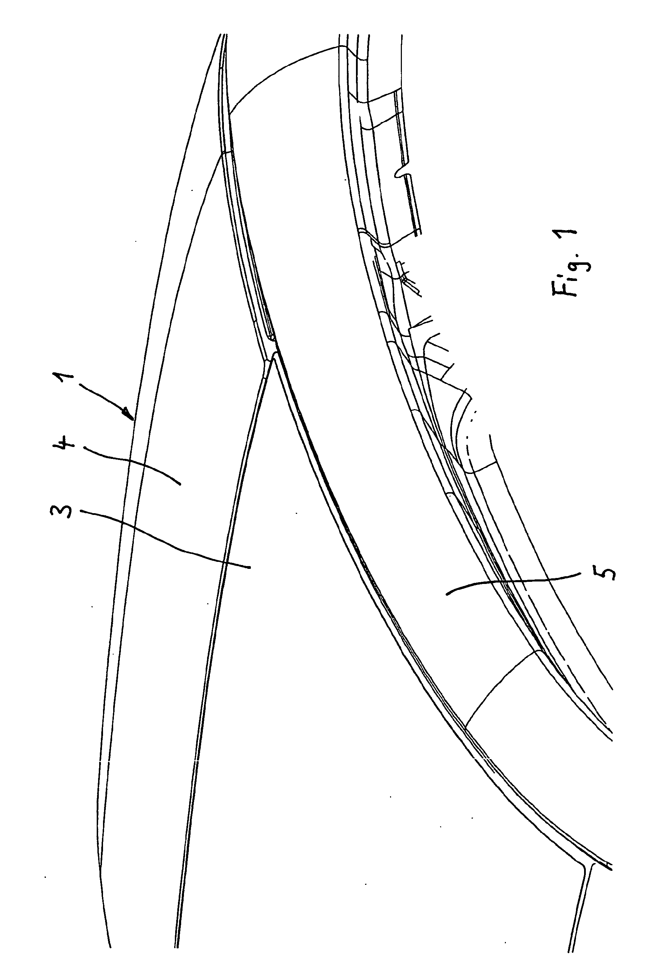

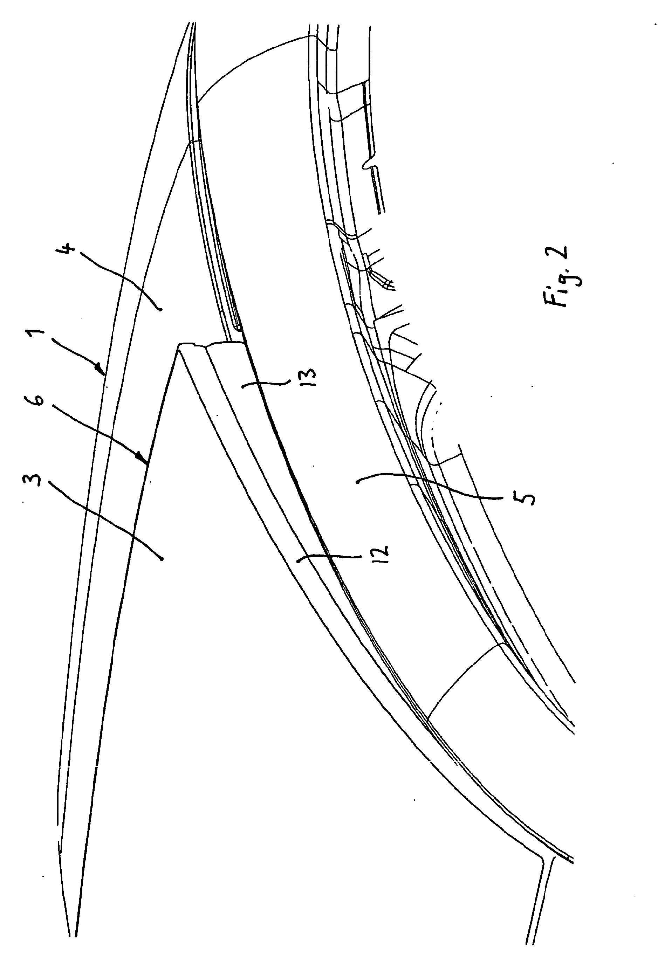

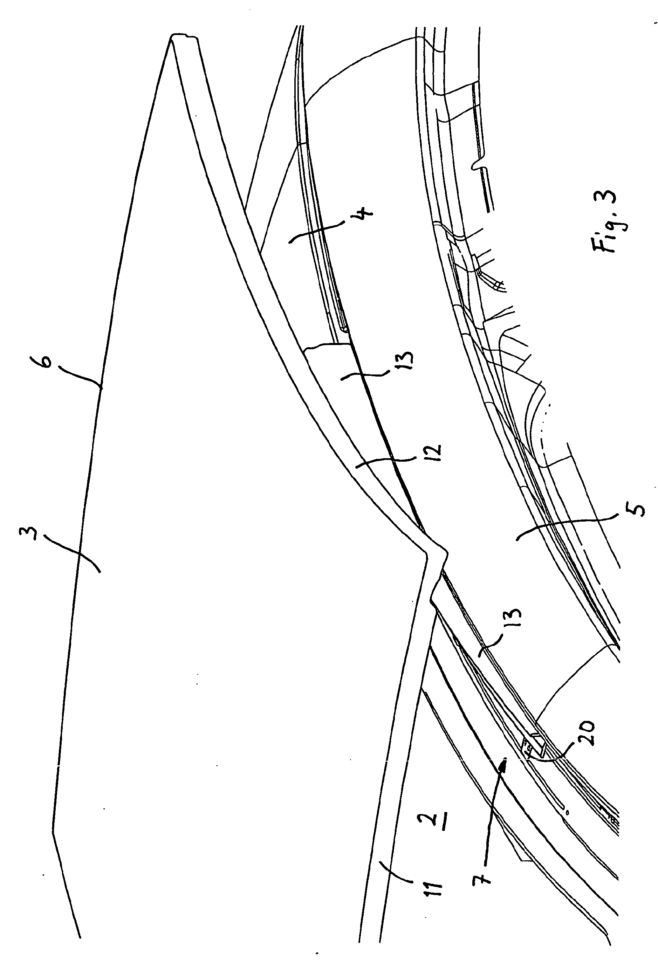

Ein Kraftfahrzeug oder Personenkraftwagen enthält ein zu öffnendes oder öffnungsfähiges Fahrzeugdach 1 mit einer Dachöffnung 2, in der ein bewegbarer Deckel 3 eines Schiebe-Hebe-Daches angeordnet ist, der zwischen einer Schließstellung, in der er in der Dachöffnung 2 bündig zur angrenzenden Dachfläche 4 und beidseitigen Dachseitenholmen 5 angeordnet ist (Fig. 1), und einer Lüftungsstellung, in der er mit seinem Hinterrand 6 über die Dachfläche 4 bzw. die Dachseitenholmen 5 hochgeschwenkt ist (Fig. 2), verstellbar ist. Der Deckel 3, der mittels einer jeweiligen Deckelmechanik (nicht dargestellt) an beidseits der Dachöffnung 3 dachfest angeordneten Längsführungen 7 (siehe Fig. 3) bewegbar gelagert ist, ist aus der Lüftungsstellung nach hinten über die angrenzenden Dachfläche 4, die das feste Fahrzeugdach oder ein angrenzendes Dachbauteil wie z. B. ein weiterer Deckel sein kann, bewegbar.

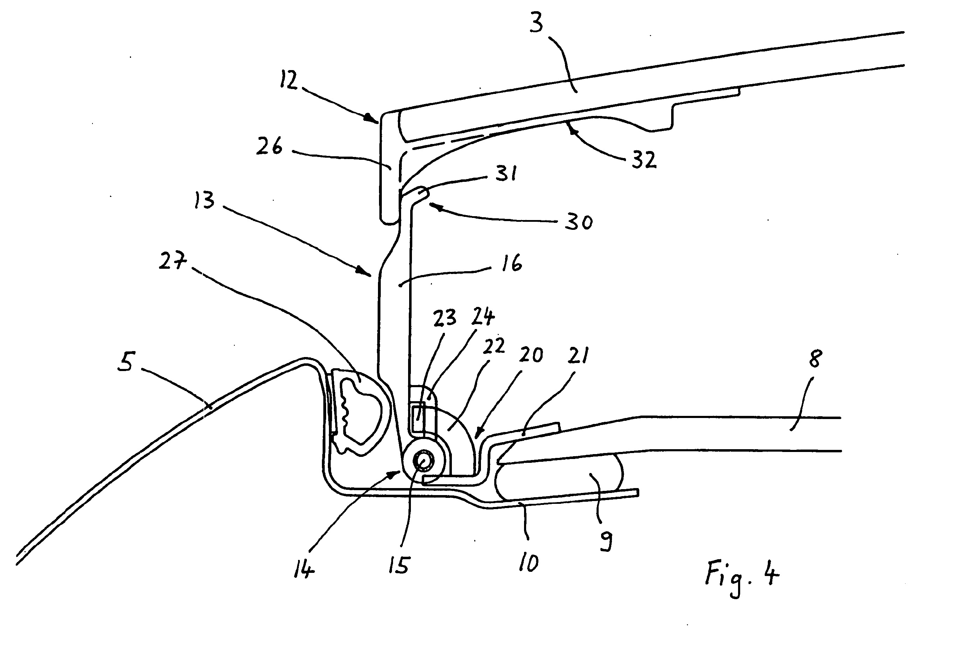

Das Schiebe-Hebe-Dach weist als Baueinheit einen Rahmen 8 auf (siehe Fig. 4), über den es mittels einer Kleberaupe 9 an einem horizontalen einwärts gerichteten Schenkel 10 des sich in Dachlängsrichtung erstreckenden Dachseitenholmes 5 befestigt ist. Der Dachseitenholm 5 verläuft zumindest in dem Bereich des Deckels 3 schräg nach außen und ist entsprechend der Dachform gekrümmt. Der Deckel 3 ist an diese Dachform und die Form der Dachseitenholme 5 angepasst und in Draufsicht in etwa trapezförmig mit in Breitenrichtung schmälerem oder kürzerem Vorderrand 11 und breiterem oder längerem Hinterrand 6 sowie zumindest in Längsrichtung gekrümmt.

Eine dem Seitenrand 12 des Deckels 3 zugeordnete Seitenblende 13 ist in Längsausrichtung mittels einer in etwa unter dem Seitenrand 12 des Deckels 3 verlaufenden Schwenklagerung 14 angebracht (siehe Fig. 4), wobei eine Schwenkachse 15 der Schwenklagerung 14 dreidimensional gekrümmt ist. Als dreidimensionale Krümmung wird diese Krümmung bezeichnet, da sie bzw. die Schwenkachse 15 der Dachkrümmung in Längsrichtung wie auch in Querrichtung folgt.

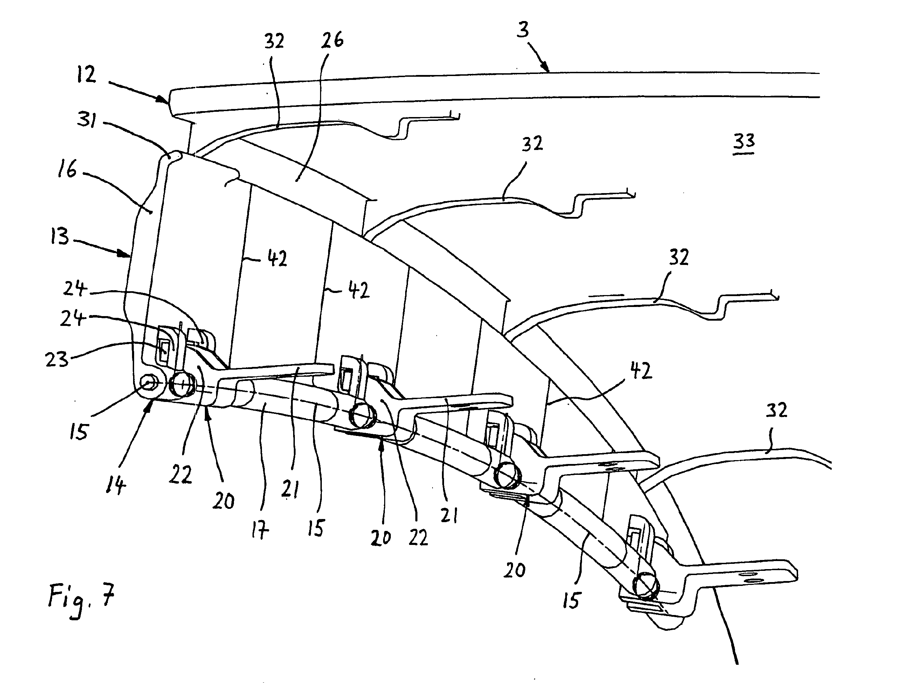

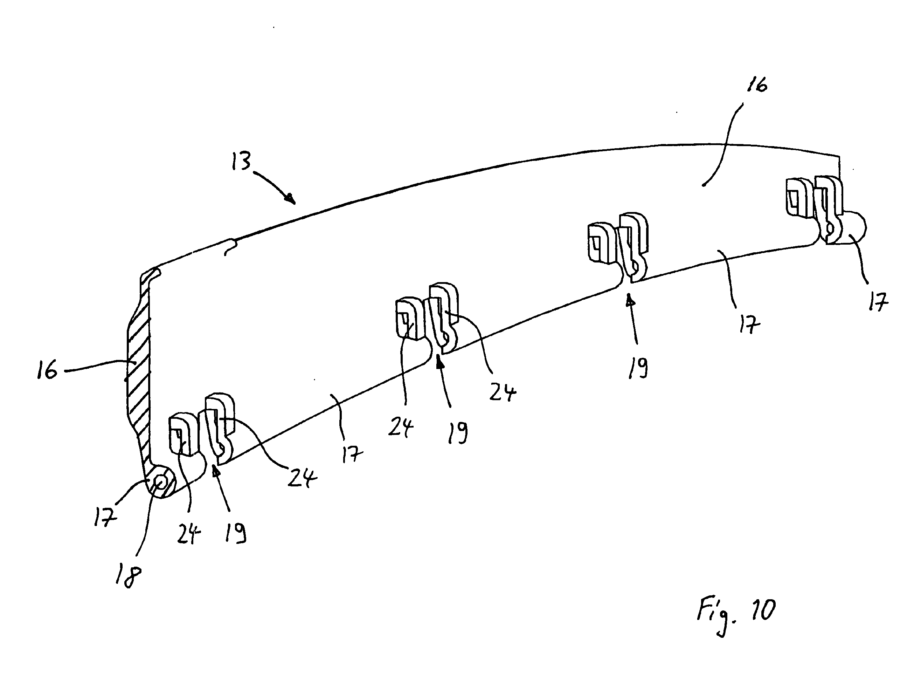

Die Seitenblende 13 weist eine flächige Blendenlamelle 16 mit einem innenrandseitigen Schwenklagerbereich 17 auf (siehe Fig. 10), der z. B. als zylindrische Verdickung gebildet ist und eine Längsbohrung 18 zur Aufnahme einer die Schwenkachse 15 bildenden Lagerachse wie z. B. einem Lagerdraht aufweist. Der Schwenklagerbereich 17 der Seitenblende 13 ist mehrfach und gemäß dem Ausführungsbeispiel (siehe Fig. 7 und 10) z. B. vierfach unterbrochen, wobei jede Unterbrechung 19 ein Lagerhalteteil 20 aufnehmen kann, das einerseits die Schwenk- oder Lagerachse 15 hält und andererseits beispielsweise mit einer länglichen Zunge 21 dachseitig z. B. am Dachseitenholm 5 oder am Rahmen 8 des Schiebe-Hebe-Daches befestigt ist.

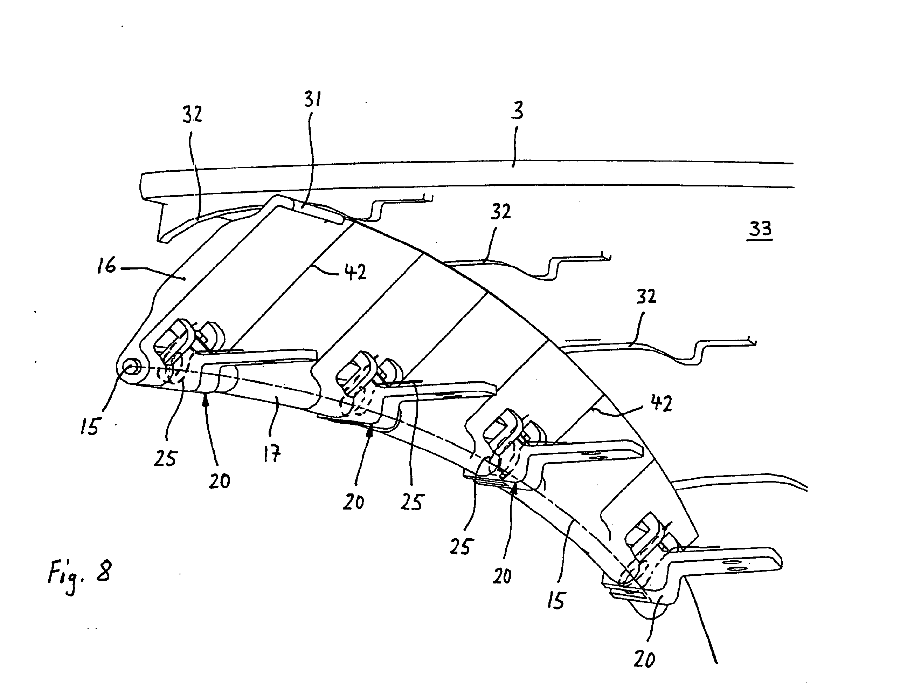

Ein Arm 22 des Lagerhalteteils 20 weist einen Lageranschlag 23 auf, der als doppelte Schulter in etwa oberhalb der Schwenkachse 15 vom Arm 22 beidseits hervorsteht. An der Seitenblende 13 ist im Bereich jeder Unterbrechung 19 ein Blendenanschlag 24 z. B. als doppelseitige Ausformung gebildet und dem Lageranschlag 23 zugeordnet. Eine Feder 25 (siehe schematische Darstellung in Fig. 8) spannt die Seitenblende 13 in ihre vertikale Abdeckstellung und gegen den Lageranschlag 23 vor.

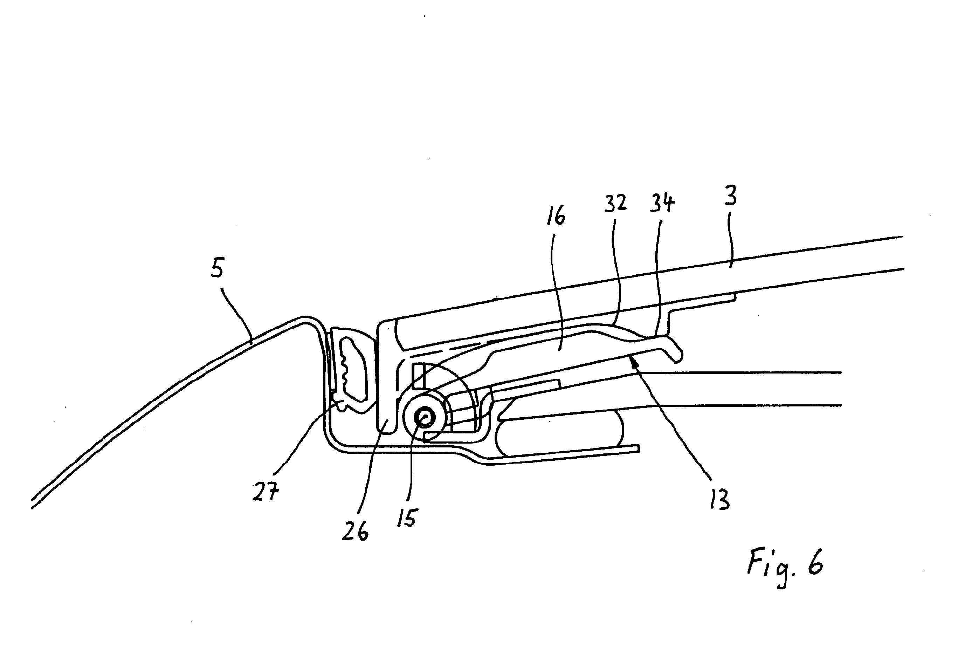

Der Deckel 3 weist an seinem Seitenrand 12 eine nach unten vorstehende vertikale Deckelblende 26 auf, an der bei geschlossenem Deckel 3 (siehe Fig. 6) eine Dichtung 27 abdichtend anliegt, die am Dachseitenholm 5 befestigt ist und bei geschlossenem Deckel 3 den nutförmigen Spalt zwischen dem Deckel 3 bzw. der Deckelblende 26 und einem vertikalen Abschnitt des Dachseitenholms 5 abdichtend ausfüllt.

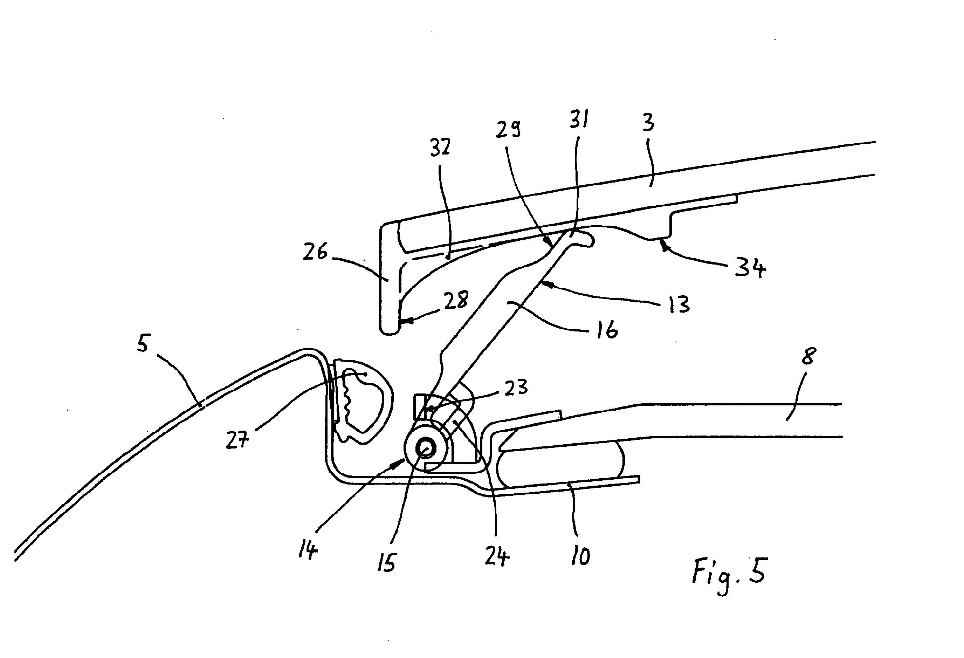

Die Deckelblende 26 enthält an ihrem Unterende eine innenliegende Anlagefläche 28, an der die Seitenblende 13 in ihrer im wesentlichen senkrechten Abdeckstellung mit einer Außenfläche 29 dicht anliegt, die an ihrem der Schwenklagerung 14 gegenüberliegenden verjüngten Außenrandabschnitt 30 gebildet ist. Der Außenrandabschnitt 30 enthält weiterhin eine randseitige Eingriffsnase 31, die mit einer Deckelsteuerkurve 32 in Gleiteingriff ist, wenn sich der ausgestellte Deckel 3 absenkt (Stellung von Fig. 4 über Fig. 5 nach Fig. 6). Mehrere Deckelsteuerkurven 32 sind voneinander beabstandet an der Deckelunterseite 33 angeordnet und verlaufen von der Anlagefläche 28 der Deckelblende 26 in Deckelquerrichtung einwärts und sind mit der Deckelblende 26 dementsprechend in Eingriff. Anstatt mehrerer Deckelsteuerkurven 32 kann auch eine flächige in Längsrichtung durchgehende Deckelsteuerkurve vorgesehen sein, die über die gesamte randseitige Eingriffsnase 31 mit der Deckelblende 26 in Eingriff ist.

Die Deckelsteuerkurven 32 (bzw. die flächige Deckelsteuerkurve) sind beispielsweise zusammen mit der Deckelblende 26 ais einstückige Deckeiumschäumung gebildet. Sie können andererseits auch eigenständige Bauteile sein, die am Deckel 3 z. B. durch Verkleben befestigt werden, oder sie können mit dem beispielsweise aus Kunststoff hergestellten Deckel 3 einstückig geformt sein.

Beim Aufschwenken des Deckels 3 (Fig. 1 nach Fig. 2) stellt sich die Deckelblende 13 durch die Kraft der Feder 25 auf und deckt den seitlichen Spalt zwischen der Deckelblende 26 und dem Dachseitenholm 5 ab (siehe Fig. 4). Die Außenfläche der in etwa vertikal stehenden Blendenlamelle 16 liegt in einer Ebene mit der Deckelblende 26. Die Dichtung 27 liegt abdichtend an einem sich verjüngenden unteren Abschnitt der Blendenlamelle 16 an. Hierdurch wird eine strömungsgünstige und weitgehend verwirbelungsfreie Abdeckung erzielt, die auch weniger Strömungsgeräusche verursacht. Daneben wird auch eine optisch ansprechende Abdeckung der dahinter liegend Deckelmechanik erzielt.

In dieser hochgeschwenkten Stellung kann der Deckel 3 zum Freigeben der Dachöffnung 2 nach hinten in eine rückwärtige Stellung über der hinteren Dachfläche 4 verfahren werden (Fig. 3). Die Seitenblende 13 kann dabei vom Vorderrand 11 des Deckels 3 im erforderlichen Maß umgeschwenkt werden. Wenn die Seitenblende 13 in ihrer vertikalen Abdeckstellung dann ohne Kontakt mit dem Deckel 3 ist, legt sie sich mit ihrem Blendenanschlag 24 an den Anschlag 23 an und behält ihre vertikale Position bei, bis der Deckel 3 aus einer rückwärtigen Stellung wieder nach vorne bewegt wird und sich mit seiner Anlagefläche 28 an die Außenfläche 29 der Seitenblende 13 dicht anlegt.

Beim Absenken des Deckels 3 aus seiner in Fig. 2 bzw. Fig. 4 dargestellten Lüftungsstellung gleitet die Eingriffsnase 31 der Seitenblende 13 entlang der Deckelsteuerkurven 32 über die Zwischenstellung der Fig. 5 in die Endstellung der Fig. 6, in der die Seitenblende 13 vollständig herabgeschwenkt ist und mit ihrer Außenfläche 29 an einer Stützfläche 34 am Ende der Deckelsteuerkurve 32 in Flächenkontakt anliegt.

Die Seitenblende 13 muss sich bei der beschriebenen und dargestellten Verschwenkung um die dreidimensional gekrümmte oder gewölbte Schwenkachse 15 flexibel verformen können. Bei einer ersten Ausführungsform der Seitenblende 13, bei der die Schwenkachse 15 eine relativ geringe Krümmung oder Wölbung aufweist, besteht die Seitenblende 13 (siehe Fig. 10) sowohl im Bereich der Blendenlamelle 16 wie auch in ihrem Schwenklagerbereich 17 aus einem vergleichsweise wenig flexiblen Werkstoff höherer Festigkeit und Steifigkeit, insbesondere einem härteren Kunststoff wie z. B. PA 6, der die geringere Verformung im Bereich des nahe der Schwenkachse 15 angeordneten Schwenklagerbereichs 17 wie auch die größere Verformung der von der Schwenkachse 15 weiter entfernten Blendenlamelle 16 ausführen kann.

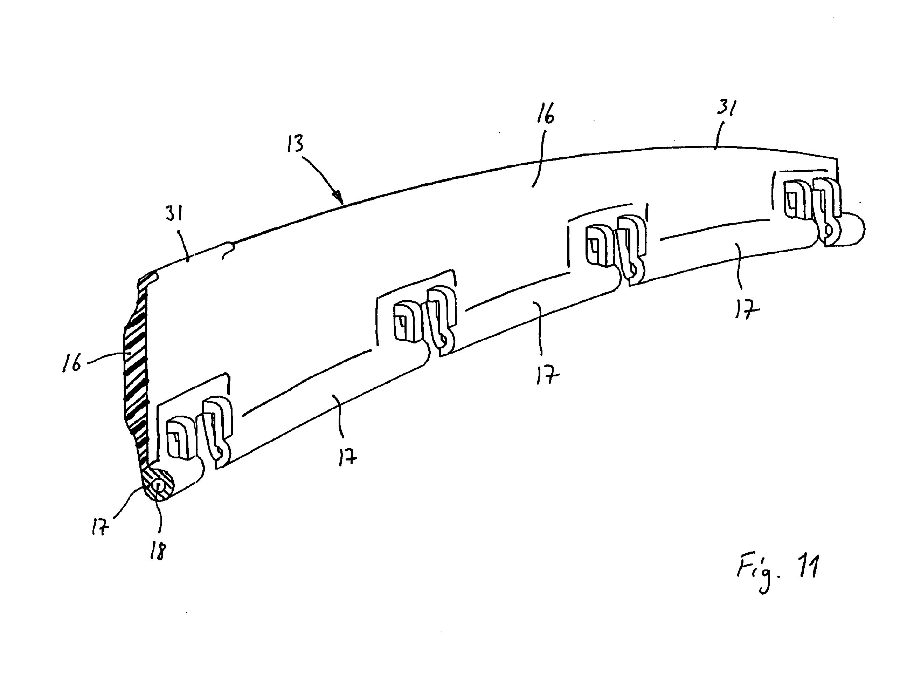

Bei einer weiteren Ausführungsform, bei der die Schwenkachse 15 gegenüber der voranstehend beschriebenen Ausführungsform eine stärkere und bezüglich der Einsatzmöglichkeiten mittlere Krümmung oder Wölbung aufweist, ist die Seitenblende 13 (siehe Fig. 11) als 2-Komponenten-Blende oder 2K-Blende aus Kunststoff hergestellt, wobei der Schwenklagerbereich 17 aus einem vergleichsweise harten Thermoplast wie z. B. PA 6 hergestellt ist und die Blendenlamelle 16 aus einem vergleichsweise weichen Thermoplast wie z. B. EPDM oder TPE angespritzt ist. Während sich beim Verschwenken der Seitenblende 13 der härtere Kunststoff des Schwenklagerbereichs 17 als an der Schwenkachse 15 liegendes Bauteil weniger verformen muss und dieses Verformung trotz seiner Härte ausführen kann, lässt der weichere Kunststoff der Blendenlamelle 16 besser an die erforderlichen größeren flexiblen Verformungen zu.

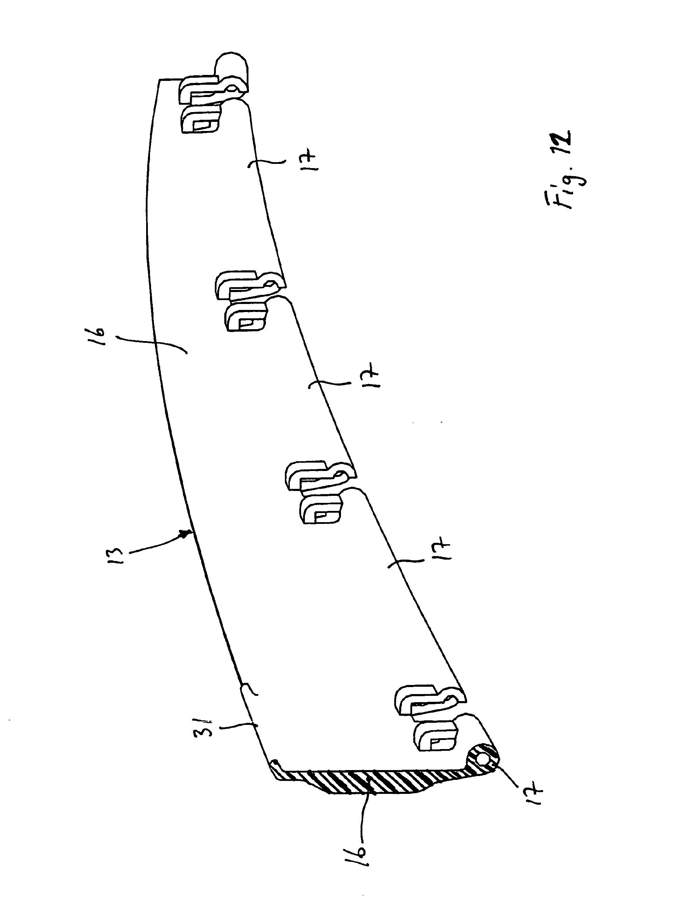

Schließlich ist die Seitenblende 13 in einer dritten Ausführungsform (siehe Fig. 12) sowohl im Bereich der Blendenlamelle 16 wie auch im Schwenklagerbereich 17 aus einem vergleichsweise sehr weichen und flexiblen Werkstoff hergestellt, z. B. aus einem Kunststoff wie EPDM oder TPE, mit entsprechend geringer Shore-Härte. Die Seitenblende 13 ist somit gegenüber der voranstehend beschriebenen Ausführungsformen für noch stärker gekrümmte oder gewölbte Schwenkachsen 15 geeignet, da sie sich sowohl im Schwenklagerbereich 17 wie auch im von der Schwenkachse 15 entfernteren Bereich der Blendenlamelle 16 im jeweils erforderlichen Maß flexibel verformen kann.

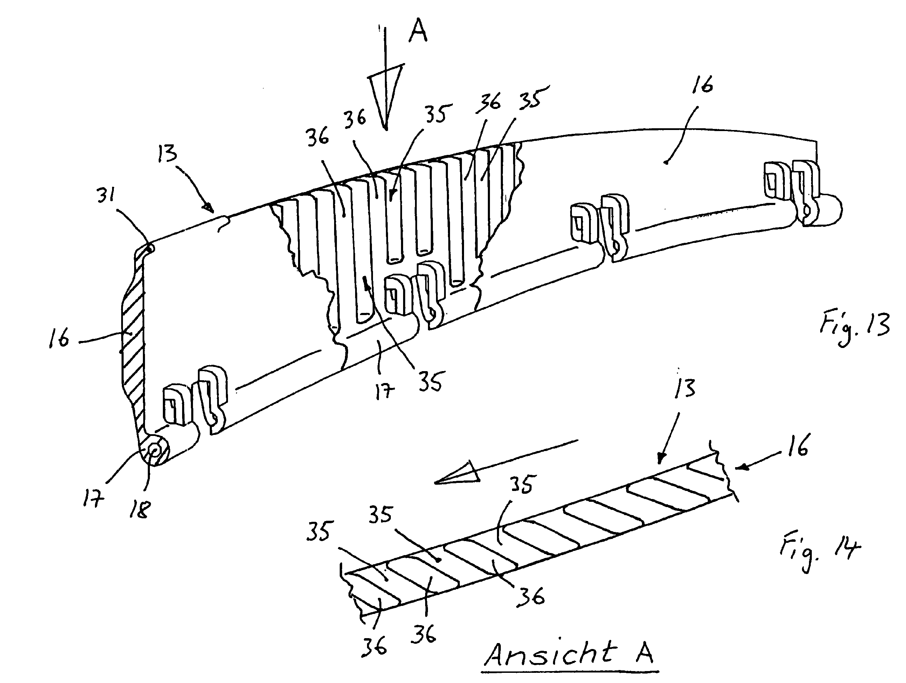

Die Ausführungsform der Seitenblende 13 der Fig. 13 und 14 enthält eine abgeänderte Blendengeometrie oder Blendengestaltung. Die Blendenlamelle 16 ist in der Art eines Kammes mit durch Schlitze 35 getrennten Stegen 36 gebildet. Die Schlitze 35 erstrecken sich vom Außenrand z. B. in etwa radial gegen den Schwenklagerbereich 17 und weisen eine derart geneigte Ausrichtung unter einem spitzen Winkel zur Strömungsrichtung einer entlang der Außenseite der Seitenblende 13 vorbeiströmenden Luftströmung (in Fig. 14 durch Pfeil dargestellt) auf, dass die Luftströmung an der Abfolge der Stege 36 und der Schlitze 35 vorbeiströmt. Die Seitenblende 13 kann aus einem festeren und härteren Kunststoff wie z. B. PA 6 oder vergleichbaren Kunststoffen hergestellt sein. Die Schlitze 35 reduzieren den Widerstand der Blendenlamelle 16 gegen die erforderliche Verformung. Die radiale Länge der Schlitze 35 kann entsprechend der erforderlichen Verformung festgelegt werden.

Grundsätzlich können auch andere Werkstoffe für die Gestaltung der erfindungsgemäßen Seitenblende 13 verwendet werden, die die erforderliche flexible Verformung bei entsprechender Krümmung oder Wölbung der Schwenkachse 15 ermöglichen.

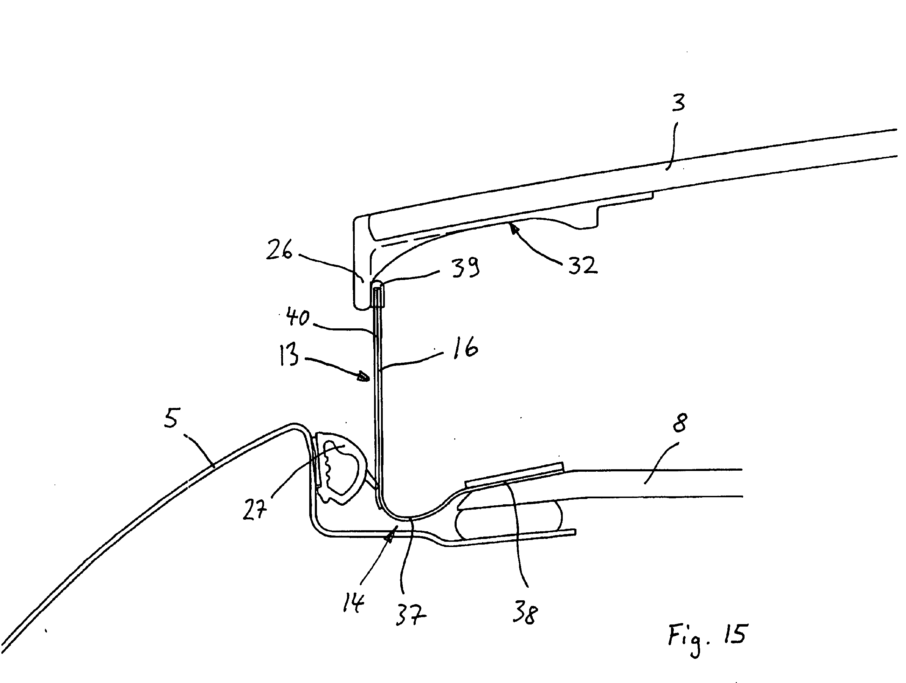

Bei einer weiteren Ausführungsform (siehe Fig. 15 bis 18) einer erfindungsgemäßen Seitenblende 13 ist die gesamte Schwenklagerung 14 von einem Schwenklagerbereich 37 der Seitenblende 13 gebildet, der sich beim Verschwenken der Seitenblende 13 elastisch verformt. Hierin unterscheidet sich diese Seitenblende 13 von den voranstehend beschriebenen Seitenblenden, bei denen der jeweilige Schwenklagerbereich 15 um eine reale körperliche Schwenkachse 15 gegenüber dem stationären Lagerhalteteil 20 verschwenkt. Bei der hier beschriebenen Seitenblende 13 geht der Schwenklagerbereich 37 in einen Befestigungsabschnitt 38 über, der in der gleichen Weise wie die Lagerhalteteile 20 der voranstehend beschriebenen Seitenblenden z. B. am Rahmen 8 festgelegt wird.

Die Seitenblende 13 ist bevorzugt im wesentlichen einstückig aus einem Kunststoff, einem Metall oder einem Verbundwerkstoff hergestellt sein und ist insgesamt elastisch verformbar, um sich beim Verschwenken an die gekrümmte oder gewölbte Schwenkachse anpassen zu können, wobei der Schwenklagerbereich 37 zusätzlich die für die Schwenklagerfunktion erforderliche elastische Verformbarkeit aufweist. Die Seitenblende 13 enthält am Außenrand ihrer Blendenlamelle 16 eine Abschlussleiste 39, die den Außenrand schützend umgreift und als Betätigungselement zum Verstellen der Seitenblende 13 an den Deckelsteuerkurven 32 entlang gleitet, wenn der Deckel 3 angehoben oder abgesenkt wird, sowie zur abdichtenden Anlage an der Anlagefläche 28 der Deckelblende 26 dient. Die Seitenblende 13 kann im Bereich der Blendenlamelle 16 eine zweite Lage 40 oder Beschichtung aufweisen. Diese kann z. B. ein Gewebe oder Stoff zur optischen Anpassung oder eine mit der Blendenlamelle 16 fest verbundene Schicht zur Erhöhung der Festigkeit bzw. des Verformungswiderstandes der Seitenblende 13 im Bereich der Blendenlamelle 16 sein. Die Abschlussleiste 39 schützt durch ihren U-förmigen Umgriff diesen zweischichtigen Aufbau am Außenrand der Blendenlamelle 16. Die zweite Lage oder Beschichtung kann innenseitig wie auch außenseitig an der Blendenlamelle 16 vorgesehen sein.

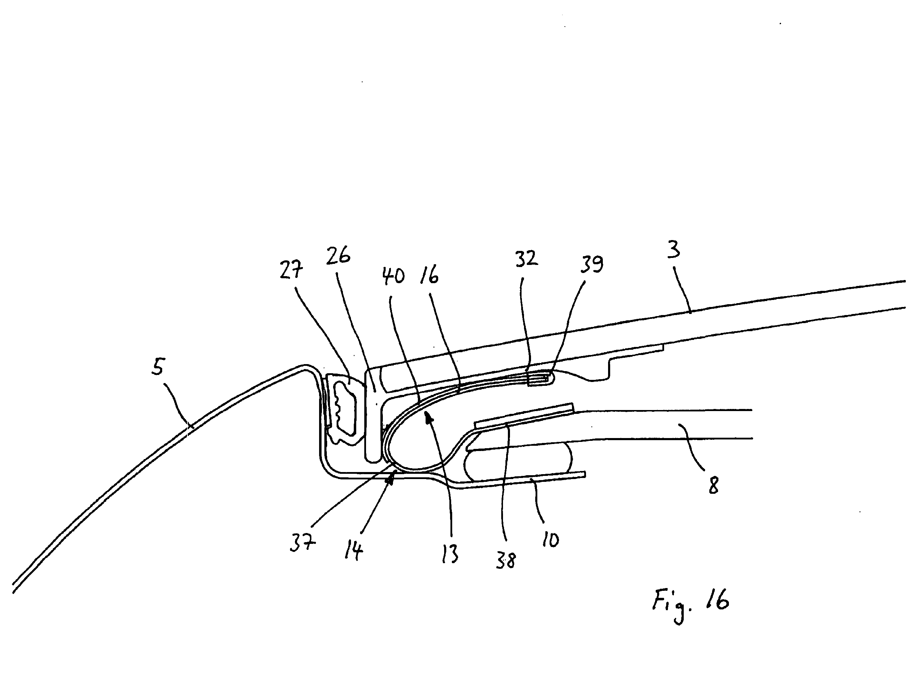

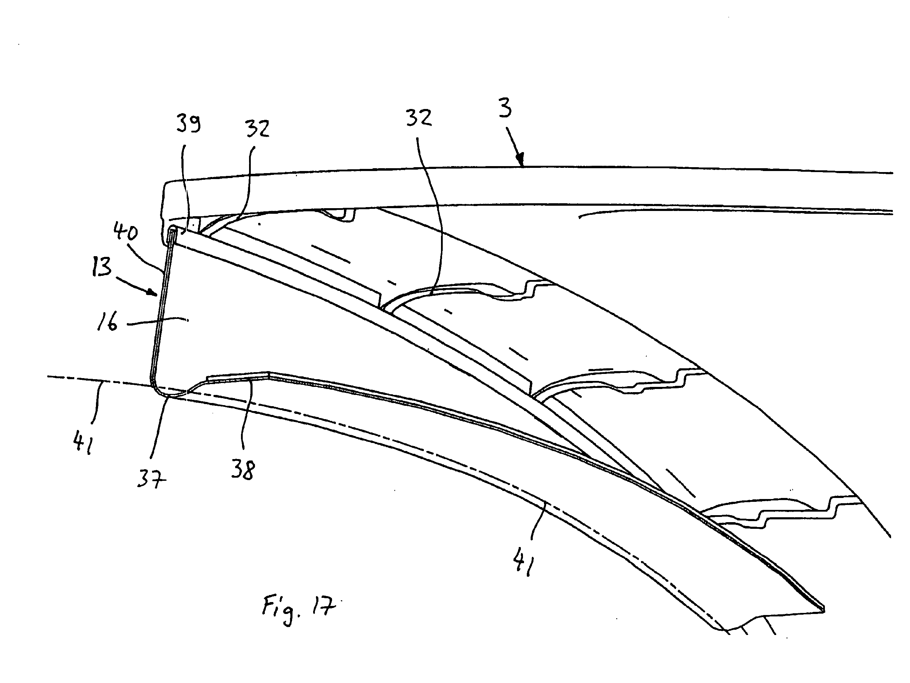

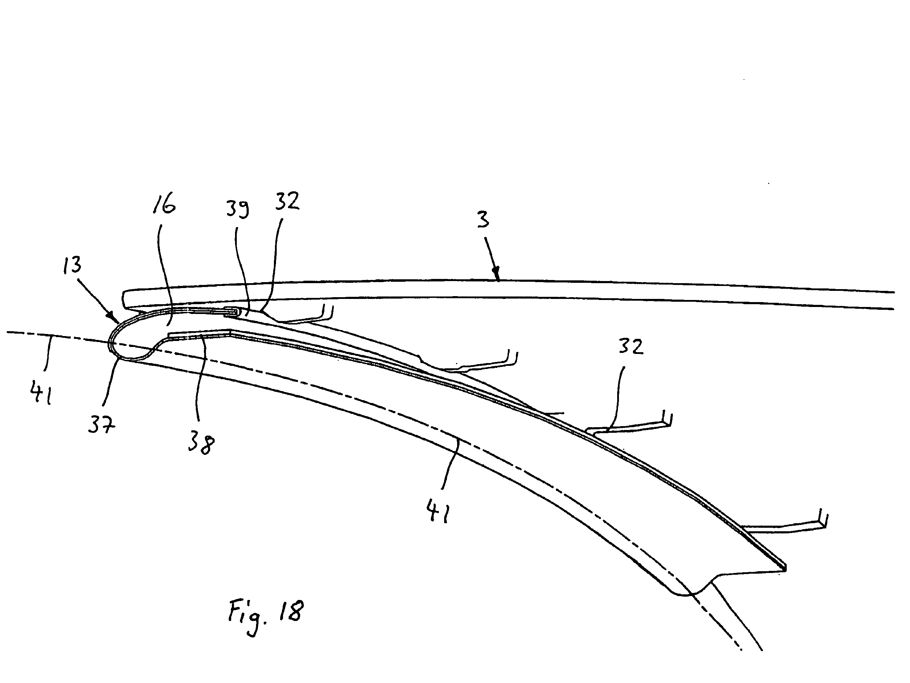

Bei hochgeschwenktem Deckel 3 (siehe Fig. 15 und 17) nimmt die Seitenblende 13 - entsprechend den vorangegangenen Ausführungsbeispielen - ihre in etwa vertikale Abdeckstellung ein. Beim Absenken des Deckels 3 verschwenken die Steuerkurven 32 im Eingriff mit der Abschlussleiste 39 die Blendenlamelle 16 bis in die Stellung der Fig. 16 und 18. Eine Schwenkachse 41 bildet sich am Schwenklagerbereich 37 mangels einer körperlich gebildeten Schwenkachse als gekrümmte räumliche Linie, die sich beim Verschwenken der Seitenblende 13 in Abhängigkeit der Schwenkstellung als jeweilige Momentanschwenkachse räumlich verlagern und anpassen kann.

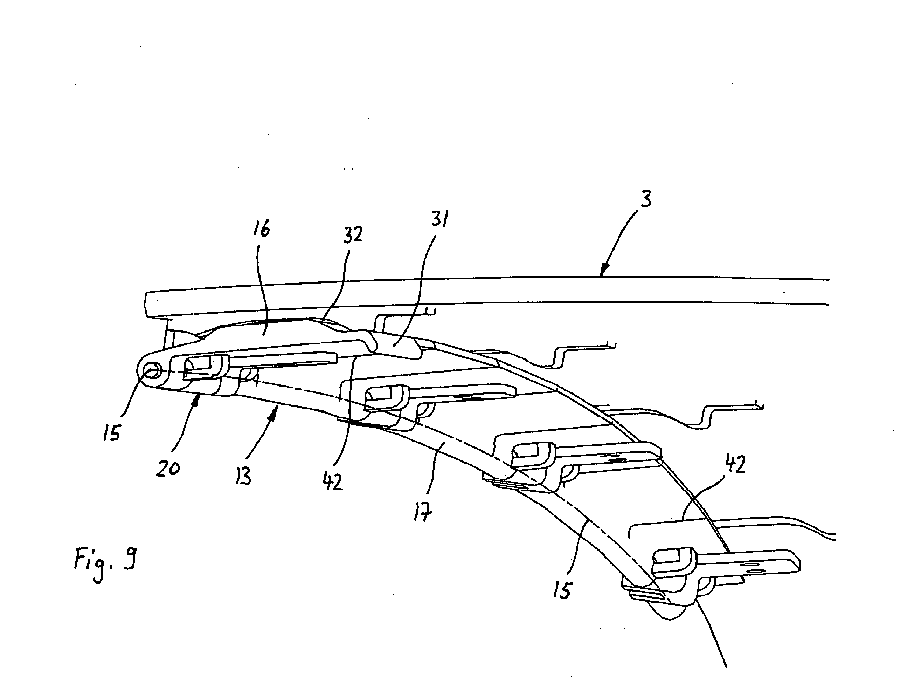

Die Blendenlamelle 16 der erfindungsgemäßen Seitenblende 13 kann grundsätzlich einstückig oder auch mehrstückig gebildet sein. Die in den Fig. 7 bis 9 eingezeichneten Linien 42, die vom Außenrand in etwa radial gegen die Schwenkachse 15 verlaufend gezeichnet sind, sollen Trennstellen oder elastische Verbindungsbereiche zwischen den dazwischen liegenden Blendenabschnitten schematisch darstellen, die die elastische Verformbarkeit der gesamten Blendenlamelle 16 bzw. der Seitenblende 13 unterstützen können.

Die Eingriffsnase 31 ist in den Fig. 7 bis 9 vereinfacht nur als kurzer Abschnitt am Hinterende der Seitenblende 13 dargestellt. Selbstverständlich ist jeder Deckelsteuerkurve 32 eine Eingriffsnase 31 zugeordnet oder die Eingriffsnase 31 erstreckt sich über die gesamte Länge der Seitenblende 13.

Die in der Beschreibung und anhand der Ausführungsbeispiele sowie in den Figuren offenbarten einzelnen Merkmale der Erfindung können in beliebigen technisch zweckmäßigen Anordnungen und Gestaltungen mit dem Erfindungsgegenstand in seiner allgemeinen Form kombiniert werden.

### Bezugszeichenliste

| | | | |
|---|---|---|---|
| 1 | Fahrzeugdach | 22 | Arm |
| 2 | Dachöffnung | 23 | Lageranschlag |
| 3 | Deckel | 24 | Blendenanschlag |
| 4 | Dachfläche | 25 | Feder |
| 5 | Dachseitenholm | 26 | Deckelblende |
| 6 | Hinterrand | 27 | Dichtung |
| 7 | Längsführung | 28 | Anlagefläche |
| 8 | Rahmen | 29 | Außenfläche |
| 9 | Kleberaupe | 30 | Außenrandabschnitt |
| 10 | Schenkel | 31 | Eingriffsnase |
| 11 | Vorderrand | 32 | Deckelsteuerkurve |
| 12 | Seitenrand | 33 | Deckelunterseite |
| 13 | Seitenblende | 34 | Stützfläche |
| 14 | Schwenklagerung | 35 | Schlitz |
| 15 | Schwenkachse | 36 | Steg |
| 16 | Blendenlamelle | 37 | Schwenklagerbereich |
| 17 | Schwenklagerbereich | 38 | Befestigungsabschnitt |
| 18 | Längsbohrung | 39 | Abschlussleiste |
| 19 | Unterbrechung | 40 | zweite Lage |
| 20 | Lagerhalteteil | 41 | Schwenkachse |
| 21 | Zunge | 42 | Linie |

## Patentansprüche

1. Seitenblende eines zu öffnenden Fahrzeugdaches, die zum Verschließen einer seitlichen Öffnung zwischen einem über das Fahrzeugdach angehobenen Deckel und dem angrenzenden Fahrzeugdach vorgesehen ist und eine dachseitig anbringbare und sich entlang der Seitenblende erstreckende Schwenklagerung aufweist,
**dadurch gekennzeichnet,**
**dass** die Schwenklagerung (14) eine feste körperliche, gekrümmte oder gewölbte Schwenkachse (15) aufweist, um die die Seitenblende (13) verschwenkbar ist, oder
**dass** die Schwenklagerung (14) von einem flexibel verformbaren Schwenklagerbereich (37) der Seitenblende (13) gebildet ist und eine gekrümmte oder gewölbte Schwenkachse (41) sich als Momentanschwenkachse entsprechend der jeweiligen Schwenkstellung der Seitenblende (13) positioniert.

2. Seitenblende nach Anspruch 1,
**dadurch gekennzeichnet, dass** sie einen die Schwenkachse (15) enthaltenden Schwenklagerbereich (17) und eine flächige Blendenlamelle (16) aufweist und dass der Werkstoff des Schwenklagerbereichs (17) und der Werkstoff der Blendenlamelle (16) für eine flexible Verformung beim Verschwenken der Seitenblende (13) um eine gekrümmte oder gewölbte Schwenkachse (15) ausgelegt ist.

3. Seitenblende nach Anspruch 2,
**dadurch gekennzeichnet, dass** der Schwenklagerbereich (17) und die Blendenlamelle (16) aus demselben Werkstoff mit denselben die Verformbarkeit bestimmenden Eigenschaften gebildet sind und
dass der Werkstoff einen höheren Verformungswiderstand für eine Schwenkachse (15) mit geringer Krümmung oder Wölbung und einen geringeren Verformungswiderstand für eine Schwenkachse (15) mit stärkerer Krümmung oder Wölbung aufweist.

4. Seitenblende nach Anspruch 3,
**dadurch gekennzeichnet, dass** der Schwenklagerbereich (17) aus einem Werkstoff mit höherem Verformungswiderstand und die Blendenlamelle (16) aus einem anderen Werkstoff mit geringerem Verformungswiderstand gebildet ist.

5. Seitenblende nach einem der Ansprüche 2 bis 4,
**dadurch gekennzeichnet, dass** die Blendenlamelle (16) Schlitze (35) enthält, die sich von ihrem Außenrand gegen den Schwenklagerbereich (17) erstrecken und voneinander getrennte Stege (36) bilden, die beim Verschwenken der Seitenblende (13) gegeneinander verformbar sind.

6. Seitenblende nach einem der Ansprüche 1 bis 5,
**dadurch gekennzeichnet, dass** der Deckel (3) an seiner Deckelunterseite (33) zumindest eine Deckelsteuerkurve (32) zum Verschwenken der Seitenblende (13) aufweist.

7. Seitenblende nach einem der Ansprüche 1 bis 6,
**dadurch gekennzeichnet, dass** sie in eine im wesentlichen vertikale Abdeckstellung vorgespannt und gegen einen Anschlag (23, 24) anlegbar ist.

8. Seitenblende nach einem der Ansprüche 1 bis 7,
**dadurch gekennzeichnet, dass** sie in vertikaler Abdeckstellung am Seitenrand (12) des Deckels (3), insbesondere an einer Deckelblende (26), abdichtend anliegt.

9. Seitenblende nach einem der Ansprüche 1 bis 8,
**dadurch gekennzeichnet, dass** sich die Seitenblende (13) bzw. die Blendenlamelle (16) in ihrer bezüglich der Schwenkachse (15) radialen Ausdehnung über ihre Länge von ihrem Hinterende zu ihrem Vorderende hin verjüngt.

10. Öffnungsfähiges Fahrzeugdach mit einer Dachöffnung (2) und einem aus der Dachöffnung (2) anhebbaren Deckel (3) und mit einer Seitenblende (13) nach einem der Ansprüche 1 bis 9.

## Claims

1. Side panel of a vehicle roof that can be opened, which side panel is provided for closing a lateral opening between a cover raised above the vehicle roof and the adjacent vehicle roof and has a pivot bearing which can be attached on the roof side and extends along the side panel, **characterized in that** the pivot bearing (14) has a fixed solid, curved or arched pivot axis (15) about which the side panel (13) is pivotable, or **in that** the pivot bearing (14) is formed by a flexibly deformable pivot bearing region (37) of the side panel (13) and a curved or arched pivot axis (41) positions as an instantaneous pivot axis in accordance with the respective pivoted position of the side panel (13).

2. Side panel according to Claim 1, **characterized in that** the side panel has a pivot bearing region (17) containing the pivot axis (15), and a planar panel segment (16), and **in that** the material of the pivot bearing region (17) and the material of the panel segment (16) are configured to provide flexible deformation during the pivoting of the side panel (13) about a curved or arched pivot axis (15).

3. Side panel according to Claim 2, **characterized in that** the pivot bearing region (17) and the panel segment (16) are formed from the same material with the same properties determining the deformability, and **in that** the material has a higher deformation resistance for a pivot axis (15) having a small curvature or arching, and a smaller deformation resistance for a pivot axis (15) having a greater curvature or arching.

4. Side panel according to Claim 3, **characterized in that** the pivot bearing region (17) is formed from a material having higher deformation resistance, and the panel segment (16) is formed from a different material having lower deformation resistance.

5. Side panel according to one of Claims 2 to 4, **characterized in that** the panel segment (16) contains slots (35) which extend from the outer edge of said panel segment towards the pivot bearing region (17) and form webs (36) which are separated from one another and are deformable against one another during the pivoting of the side panel (13).

6. Side panel according to one of Claims 1 to 5, **characterized in that** the lower side (33) of the cover (3) has at least one cover guidance cam (32) for the pivoting of the side panel (13).

7. Side panel according to one of Claims 1 to 6, **characterized in that** said side panel is pretensioned into a substantially vertical covering position and can be placed against a stop (23, 24).

8. Side panel according to one of Claims 1 to 7, **characterized in that** the side panel in the vertical covering position rests in a sealing manner against the side edge (12) of the cover (3), in particular against a cover panel (26).

9. Side panel according to one of Claims 1 to 8, **characterized in that** the side panel (13) or the panel segment (16) tapers in the radial extent thereof with respect to the pivot axis (15) over the length thereof from the rear end thereof towards the front end thereof.

10. Openable vehicle roof with a roof opening (2) and a cover (3) which is raisable out of the roof opening (2) and with a side panel (13) according to one of Claims 1 to 9.

## Revendications

1. Obturateur latéral pour un toit ouvrant d'un véhicule, qui est prévu pour fermer une ouverture latérale entre un couvercle soulevé au-dessus du toit du véhicule et le toit du véhicule adjacent, et présente un support pivotant pouvant être monté du côté du toit et s'étendant le long de l'obturateur latéral,
**caractérisé en ce que**
le support pivotant (14) présente un axe de pivotement (15) fixe, massif, courbé ou cintré, autour duquel peut pivoter l'obturateur latéral (13), ou
le support pivotant (14) est formé par une région de palier pivotant (37) déformable élastiquement de l'obturateur latéral (13) et un axe de pivotement courbé ou cintré (41) se positionne en tant qu'axe de pivotement momentané de manière correspondant à la position de pivotement respective de l'obturateur latéral (13).

2. Obturateur latéral selon la revendication 1, **caractérisé en ce qu'**il présente une région de palier pivotant (17) contenant l'axe de pivotement (15) et une lamelle d'obturateur plate (16), et **en ce que** le matériau de la région de palier pivotant (17) et le matériau de la lamelle d'obturateur (16) sont conçus pour une déformation flexible lors du pivotement de l'obturateur latéral (13) autour d'un axe de pivotement courbé ou cintré (15).

3. Obturateur latéral selon la revendication 2,
**caractérisé en ce que** la région de palier pivotant (17) et la lamelle d'obturateur (16) sont formées du même matériau ayant les mêmes propriétés définissant la capacité de déformation et **en ce que** le matériau présente une plus grande résistance à la déformation pour un axe de pivotement (15) de plus faible courbure ou cintrage et une plus faible résistance à la déformation pour un axe de pivotement (15) de une plus forte courbure ou de plus fort cintrage.

4. Obturateur latéral selon la revendication 3,
**caractérisé en ce que** la région de palier pivotant (17) se compose d'un matériau ayant une résistance à la déformation plus élevée et la lamelle d'obturateur (16) se compose d'un autre matériau ayant une plus faible résistance à la déformation.

5. Obturateur latéral selon l'une quelconque des revendications 2 à 4,
**caractérisé en ce que** la lamelle d'obturateur (16) contient des fentes (35) qui s'étendent depuis son bord extérieur vers la région de palier pivotant (17) et qui forment des nervures (36) séparées les unes des autres qui peuvent être déformées les unes contre les autres lors d'un pivotement de l'obturateur latéral (13).

6. Obturateur latéral selon l'une quelconque des revendications 1 à 5,
**caractérisé en ce que** le couvercle (3) présente, au niveau de son côté inférieur de couvercle (33), au moins une came de commande de couvercle (32) pour le pivotement de l'obturateur latéral (13).

7. Obturateur latéral selon l'une quelconque des revendications 1 à 6,
**caractérisé en ce qu'**il peut être précontraint dans une position de recouvrement essentiellement verticale et qu'il peut être appliqué contre une butée (23, 24).

8. Obturateur latéral selon l'une quelconque des revendications 1 à 7,
**caractérisé en ce qu'**il s'applique hermétiquement dans la position de recouvrement verticale contre le bord latéral (12) du couvercle (3), en particulier contre un obturateur de couvercle (26).

9. Obturateur latéral selon l'une quelconque des revendications 1 à 8,
**caractérisé en ce que** l'obturateur latéral (13) ou la lamelle d'obturateur (16) se rétrécit dans son étendue radiale par rapport à l'axe de pivotement (15) sur sa longueur depuis l'extrémité arrière jusqu'à l'extérieur avant.

10. Toit de véhicule ouvrant comprenant une ouverture de toit (2) et un couvercle (3) pouvant être soulevé de l'ouverture de toit (2) et comprenant un obturateur latéral (13) selon l'une quelconque des revendications 1 à 9.
